# EUROPÄISCHE PATENTSCHRIFT

(11) **EP 3 159 535 B1**
(45) Veröffentlichungstag und Bekanntmachung des Hinweises auf die Patenterteilung: **12.12.2018**
(21) Anmeldenummer: 16192556.5
(22) Anmeldetag: 06.10.2016
(51) Int. Cl.: F02M 63/00, F16K 31/10, F16K 31/06

(54) **ELEKTROMAGNETISCHES VENTIL**
ELECTROMAGNETIC VALVE
VANNE ÉLECTROMAGNÉTIQUE

(30) Priorität: 23.10.2015 DE 102015118090
(43) Veröffentlichungstag der Anmeldung: 26.04.2017
(73) Patentinhaber: Kendrion (Villingen) GmbH, 78048 Villingen-Schwenningen (DE)
(72) Erfinder: Flühs, Joachim, 78050 Villingen-Schwenningen (DE); Brandenburg, Holger, 78048 Villingen-Schwenningen (DE); Bergfeld, Björn, 72336 Balingen-Endingen (DE); Zelano, Frank, 78112 St. Georgen (DE)
(74) Vertreter: Westphal, Mussgnug & Partner Patentanwälte mbB

(56) Entgegenhaltungen:
- DE-A1- 2 052 307
- DE-A1- 3 427 526
- DE-A1- 19 917 756
- JP-A- S58 131 353

## Beschreibung

Die Erfindung geht aus von einem elektromagnetischen Ventil gemäß dem Oberbegriff des Patentanspruchs 1.

Elektromagnetische Ventile sind aus dem Stand der Technik bekannt. In der Regel weisen derartige Ventile einen im Wesentlichen zylindrischen Ventilkörper auf, in welchem eine Erregerspule auf einen Spulenträger gewickelt und in einer axialen Durchgangsöffnung des Spulenträgers ein bei Bestromung der Erregerspule entlang einer ersten Achse, vorzugsweise einer Mittenachse, verschiebbarer Anker angeordnet ist. Bei axialer Verschiebung des Ankers wird ein stirnseitig am Anker angeordnetes Dichtelement in einen Ventilsitz gedrückt oder frei gegeben.

Ein Ventil weist im Allgemeinen wenigstens einen Anschluss für einen Zulauf, auch Zulaufkanal genannt, und wenigstens einen Anschluss für einen Ablauf, auch Ablaufkanal genannt, auf. Das Dichtelement kann in verschiedene Stellungen geschaltet werden, zumindest in eine geöffnete Stellung, in der das Dichtelement einen Anschluss nicht abdichtet, und in eine geschlossene Stellung, in der das Dichtelement einen Anschluss abdichtet.

In der Fluidtechnik werden elektromagnetische Ventile oft als Wegesitzventile verwendet, um einen Weg eines Arbeitsmediums, z. B. Druckluft oder Hydraulikflüssigkeit, freizugeben, zu sperren oder die Durchflussrichtung zu ändern. Ein Wegeventil ist bestimmt durch die Anzahl der vorhandenen Anschlüsse und Schaltstellungen. Bei den Wegesitzventilen bezeichnet die erste Ziffer die Anzahl der Anschlüsse, während die zweite Ziffer die Anzahl der Schaltstellungen kennzeichnet, z. B. haben 3/2-Wegesitzventile drei Anschlüsse, in der Regel einen P-Anschluss (Pumpe), einen T-Anschluss (Tank) und einen A-Anschluss (Arbeitszylinder), und zwei Schaltstellungen, in der Regel "offen" und "geschlossen".

Derartige Ventile sind beispielsweise aus der EP 0 684 418 B1, der DE 34 27 526 A1 und der DE 198 34 786 C2 bekannt.

Bei den aus dem Stand der Technik bekannten Ventilen ist das Dichtelement in dem Ventilsitz entweder lose angeordnet oder mit dem Anker über einen Stößel derart feststehend in Verbindung, dass das Dichtelement vom Anker zwangsgeführt ist. Es hat sich gezeigt, dass lose Dichtelemente durch auftretende Strömungskräfte nicht vollständig einer Achsbewegung des Ankers, dem sogenannten Hub, folgen können, so dass das Ventil nicht vollständig öffnen oder schließen kann. Bei Dichtelementen, die mit dem Anker feststehend in Verbindung angeordnet sind, führen Fluchtungsfehler zwischen Achse und Ventilsitz unter Umständen dazu, dass das Dichtelement nicht vollständig in den Sitz gelangt und somit eine Leckage auftreten kann.

Hier setzt die Erfindung an.

Der Erfindung hat die Aufgabe zugrunde gelegen, ein elektromagnetisches Ventil bereitzustellen, bei dem das Dichtverhalten eines elektromagnetischen Ventils verbessert wird.

Die Aufgabe der Erfindung wird gelöst durch ein elektromagnetisches Ventil mit den Merkmalen des Patentanspruchs 1.

Vorteilhafte Ausgestaltungen und Weiterbildungen der Erfindung sind in den Unteransprüchen angegeben.

Das erfindungsgemäße elektromagnetische Ventil weist wenigstens einen Ventilsitz auf, der zwischen wenigstens einem Zulaufkanal und wenigstens einem Ablaufkanal angeordnet ist, ein Dichtelement, mit dem der Ventilsitz verschließbar ist, und ein Betätigungselement, mit dem das Dichtelement zum Verschließen des Ventilsitzes bewegbar ist. Erfindungswesentlich ist, dass das Betätigungselement an seinem zu dem Dichtelement weisenden Ende eine Aufnahme aufweist, in der Aufnahme ein Lagerelement angeordnet ist, und das Dichtelement mit dem Lagerelement feststehend verbunden ist. Das Lagerelement kann dabei vorteilhafterweise nahezu spielfrei auf der Achse angeordnet sein. Durch eine derartige Anordnung des Lagerelements können Fluchtungsfehler zwischen Achse und Ventilsitz nahezu vollständig ausgeglichen werden.

Gemäß einer bevorzugten Ausgestaltung der Erfindung ist das Lagerelement und/oder das Dichtelement eine Kugel. Der Vorteil einer Kugel als Dichtelement ist eine beliebige Lage beim Abdichten am Ventilsitz, eine hohe Präzision und eine hohe Oberflächengüte. Die Kugel kann vorteilhafterweise gehärtet und daher möglichst verschleißfest sein.

Vorzugsweise ist das Betätigungselement entlang einer durch den Zulaufkanal verlaufenden ersten Achse bewegbar. Durch eine axiale Bewegung kann das Dichtelement besonders einfach zwischen verschiedenen Schaltstellungen bewegt werden.

Das Lagerelement ist vorteilhafterweise um ein Zentrum des Lagerelements drehbar gelagert. Damit kann das Lagerelement insbesondere um das Zentrum in jeder Richtung gedreht werden.

Gemäß einer weiteren Ausgestaltung der Erfindung weist das Betätigungselement einen Stößel auf. Das Lagerelement ist dabei an dem Stößel angeordnet. Der Stößel ist vorzugsweise aus Stahl oder einem Kunststoff gefertigt.

In einer Weiterbildung der Erfindung weist das Betätigungselement an dem Ende, das zu dem Dichtelement weist, eine Umspritzung auf. Die Umspritzung ist dabei derart ausgestaltet, dass das Lagerelement in der Umspritzung mit freiem Spiel angeordnet ist. Beispielsweise kann die Umspritzung eine Kunststoffumspritzung sein.

Vorteilhafterweise ist ein Vorsprung des Stößels von der Umspritzung umgeben. In diesen Vorsprung kann die Umspritzung eingreifen und so mit dem Stößel verbunden werden.

Die Umspritzung weist an dem Ende des Betätigungselements, das zu dem Dichtelement weist, vorzugsweise eine Fassung auf. In der Fassung kann das Lagerelement einfach angeordnet werden.

Um Teile einzusparen, kann die Fassung vorteilhafterweise auch durch entsprechendes Einspritzen des Lagerelements in die Umspritzung direkt erzeugt werden.

Für den Fall, dass der Stößel aus einem Kunststoff gefertigt ist, kann die Umspritzung und die Fassung auch in den Stößel integriert sein.

Gemäß einer bevorzugten Ausgestaltung der Erfindung ist das Dichtelement an dem Lagerelement entlang einer durch den ersten Kanal verlaufenden ersten Achse axial fixiert. Durch die axiale Fixierung kann das Dichtelement auch bei auftretenden Strömungskräften der Achsbewegung im Wesentlichen vollständig folgen.

Vorteilhafterweise ist das Dichtelement an dem Lagerelement an einer Verbindungsstelle angeschweißt. Aufgrund der Schweißverbindung ist das Dichtelement unlösbar mit dem Lagerelement verbunden und kann daher einer Achsbewegung des Lagerelements besonders gut folgen.

Bevorzugt ist das Dichtelement zu der ersten Achse radial bewegbar. Durch die radiale Bewegung können Fluchtungsfehler ausgeglichen werden.

Vorzugsweise ist das Dichtelement um ein Zentrum des Lagerelements verschwenkbar. Durch eine Schwenkbewegung um das Zentrum des Lagerelements kann das Dichtelement besonders einfach radial zu der ersten Achse bewegt werden.

In einer Weiterbildung der Erfindung ist das zu dem Dichtelement weisende Ende des Betätigungselements und/oder eine Umspritzung an dem Ende geeignet ausgebildet, einen Schwenkwinkel bei einer Schwenkbewegung des Dichtelements um ein Zentrum des Lagerelements zu begrenzen. Typischerweise reicht ein Schwenkwinkel mit einem Betrag von 10° aus, um Fluchtungsfehler auszugleichen.

In einer weiteren vorteilhaften Ausgestaltung der Erfindung weist das elektromagnetische Ventil einen Kugelkäfig zur Führung des Dichtelements auf. Der Kugelkäfig ist insbesondere derart gestaltet, dass das Dichtelement in dem Kugelkäfig zentrisch geführt werden kann. Durch eine radiale bewegliche Anbindung an das Betätigungselement kann das Dichtelement bei einem Mittenversatz zwischen dem Kugelkäfig und dem Betätigungselement dennoch axial mit dem Betätigungselement spielfrei bzw. spielarm verbunden werden.

Die Erfindung wird anhand der nachfolgenden Figuren ausführlich erläutert. Es zeigen:
- Figur 1: eine Schnittdarstellung eines Ausführungsbeispiels eines erfindungsgemäßen elektromagnetischen Ventils,
- Figur 2: eine Ausschnittvergrößerung eines Ausführungsbeispiels eines Ventilsitzes mit einem Ausführungsbeispiel eines Betätigungselements und eines in dem Betätigungselement angeordneten Lagerelements,
- Figur 3: eine Schnittdarstellung des Betätigungselements nach Figur 2 ohne Lagerelement,
- Figur 4: eine weitere Schnittdarstellung eines Betätigungselements nach Figur 2 ohne Lagerelement,
- Figur 5: eine Seitenansicht eines weiteren Ausführungsbeispiels eines Betätigungselements,
- Figur 6: eine Schnittdarstellung des Betätigungselements nach Figur 4 mit Lagerelement,
- Figur 7: eine Schnittdarstellung des Betätigungselements nach Figur 2 mit einem Ausführungsbeispiel eines Kugelkäfigs, und
- Figur 8: eine Schnittdarstellung eines weiteren Ausführungsbeispiels eines erfindungsgemäßen elektromagnetischen Ventils.

In den Figuren bezeichnen gleiche Bezugszeichen jeweils gleiche Teile mit der gleichen Bedeutung.

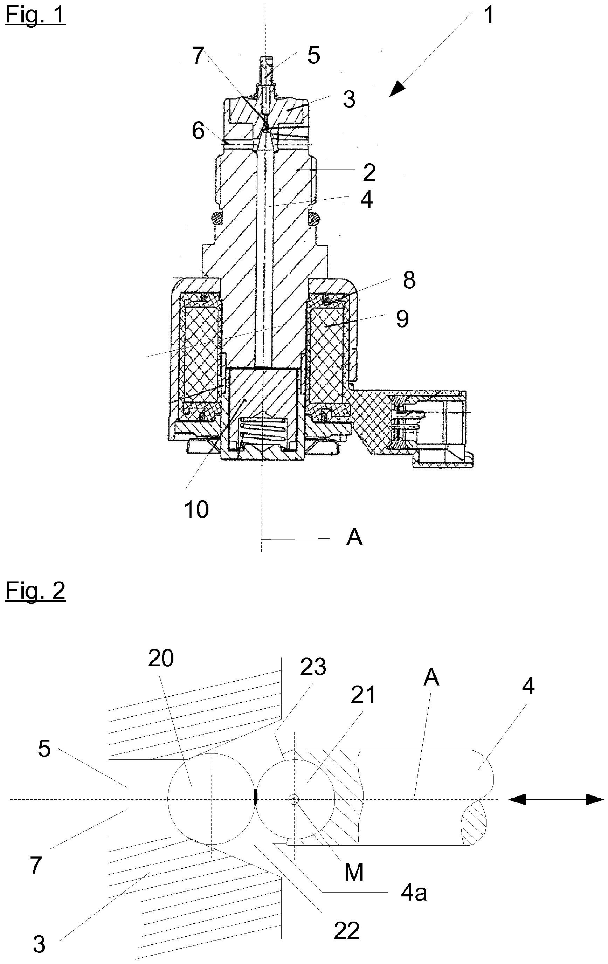

In Figur 1 ist ein elektromagnetisches Ventil 1 als 2/2-Wegesitzventil dargestellt mit einem zylinderförmigen Ventilkörper 2. In dem Ventilkörper 2 ist eine Spule 9 auf einem Spulenträger 8 gewickelt angeordnet. Der Spulenträger 8 weist eine axiale Durchgangsöffnung auf, durch die ein Anker 10 entlang einer ersten Achse A verschiebbar ist.

Bei Bestromung der Spule 9 wird eine elektromagnetische Kraft auf den Anker 10 ausgeübt, so dass sich dieser entlang der ersten Achse A in Richtung auf einen Ventilsitz 3 bewegt. Das elektromagnetische Ventil 1 kann insbesondere derart ausgestaltet sein, dass das elektromagnetische Ventil 1 bei voller Bestromung trotz unterschiedlich großer Kräfte am Ventilsitz 3, die durch unterschiedliche Zulaufdrücke hervorgerufen werden können, gerade sperrt.

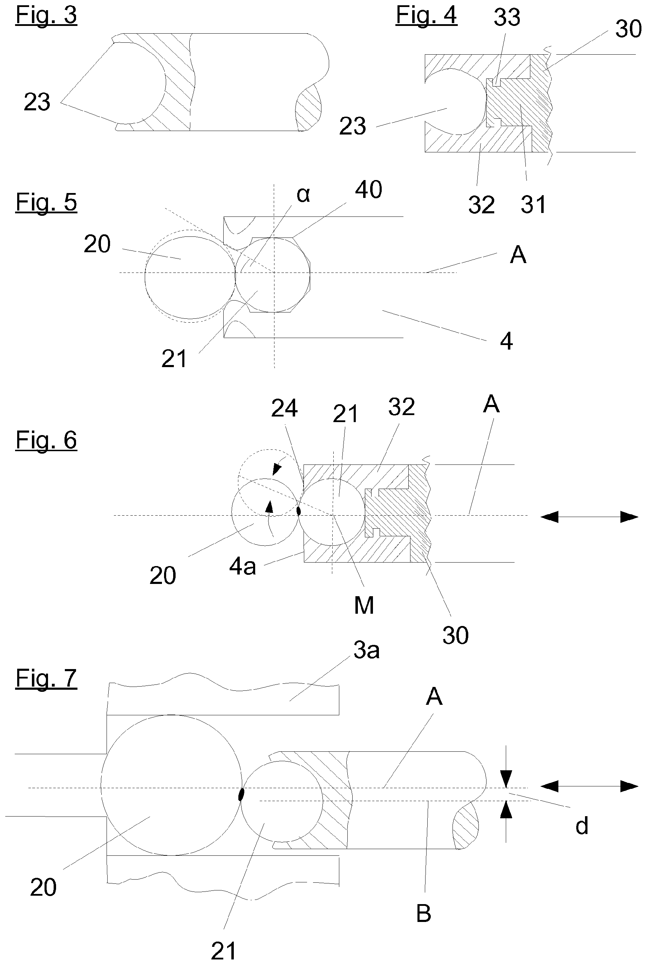

An dem Anker 10 ist ein Betätigungselement 4 angeordnet, das als ein Stößel 30 ausgebildet ist, wie beispielsweise in Figur 4 dargestellt. Der Stößel 30 ist aus Stahl gefertigt. Alternativ kann der Stößel 30 aus einem Kunststoff gefertigt sein.

Der Stößel 30 wirkt auf ein Lagerelement 21 ein, an dem erfindungsgemäß ein Dichtelement 20 feststehend verbunden ist, wobei das Lagerelement 21 an einem zu dem Dichtelement 20 weisenden Ende 4a des Betätigungselements 4 angeordnet ist. In den Figuren 1 bis 8 sind das Lagerelement 21 und das Dichtelement 20 jeweils in Form einer Kugel gezeigt. Ein kugelförmiges Dichtelement wird auch als Ventilkugel bezeichnet. In der Figur 2 ist das Dichtelement 20 an einer Verbindungsstelle 22 des Lagerelements 21 angeschweißt, z. B. mittels Kondensator-Entladungsschweißen.

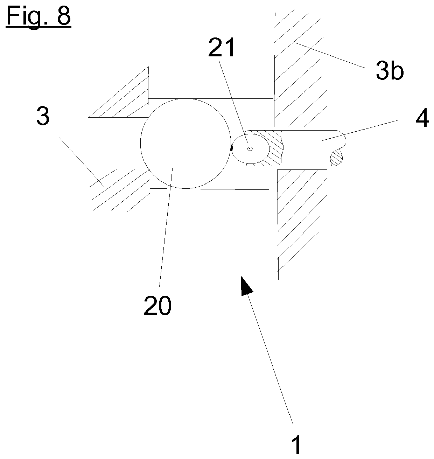

Das Dichtelement 20 wird bei Bestromung der Spule 9 aufgrund einer axialen Bewegung des Stößels 30 in einen Ventilsitz 3, 3a gedrückt oder aus dem Ventilsitz 3, 3a herausgezogen. Das in Figur 1 als 2/2 Wegesitzventil gezeigte elektromagnetische Ventil 1 weist aufgrund von zwei möglichen Anschlüssen, nämlich einem Zulaufkanal 5 und einem Ablaufkanal 6, und zwei Schaltstellungen einen Ventilsitz 2 auf, der in einer Ausschnittvergrößerung in Figur 2 dargestellt ist. Figur 8 zeigt ein elektromagnetisches Ventil 1, das als 3/2 Wegesitzventil ausgebildet ist. Aufgrund der drei möglichen Anschlüsse und der zwei Schaltstellungen weist das elektromagnetische Ventil der Figur 8 neben einen Ventilsitz 3 einen weiteren Ventilsitz 3b auf.

Das Lagerelement 21 ist in einer Fassung 23 des Betätigungselements 4 angeordnet. Figur 3 zeigt eine Fassung 23, in die das Lagerelement 21 eingeklippst werden kann. Denkbar ist auch, dass das Lagerelement 21 mit der Fassung 23 verbördelt oder verstemmt ist. In der Fassung 23 kann das Lagerelement 21 wie eine Kugel eines Kugelschreibers geführt werden. Ferner kann das Lagerelement 21 auch in einer Sackbohrung 40 oder in einer lagerschalenförmigen Aufnahme des Betätigungselements 4 angeordnet sein, wie in Figur 5 dargestellt ist. Das Lagerelement 21 ist um ein Zentrum M drehbar in jeder Richtung drehbar, d. h. das Lagerelement 21 ist in der Fassung 23 nahezu spielfrei angeordnet.

Durch die nahezu spielfreie Anordnung des Lagerelements in dem Betätigungselement 4 und der erfindungsgemäßen Verbindung des Dichtelements 20 über die Verbindungsstelle 22 mit dem Lagerelement 21 ist das Dichtelement 20 um das Zentrum des Lagerelements 21 verschwenkbar, wie aus den Figuren 5 und 6 ersichtlich ist. Das Lagerelement 21 ist dabei in dem Betätigungselement 4 derart angeordnet, dass ein Schwenkwinkel α betragsmäßig begrenzt ist. Vorzugsweise ist der Schwenkwinkel α im Wesentlichen nicht größer als 10°.

Der Schwenkwinkel α kann entweder durch die Form der Sackbohrung 40 oder durch eine Umspritzung 32 des Stößels 30 begrenzt werden. Hierzu weist die Umspritzung 32 einen Anschlag 24 auf, an den das Dichtelement 20 bei Erreichen eines maximalen Schwenkwinkels α während einer Schwenkbewegung anschlägt. Die Umspritzung 32, wie in den Figuren 4, 6 beispielhaft gezeigt, ist eine Kunststoffumspritzung. Die Fassung 23 wird durch die Umspritzung 32 'bereitgestellt. Der Stößel 30 weist eine Nut 33 auf, in die die Umspritzung 32 eingreifen kann, so dass die Umspritzung 32 mit dem Stößel 30 verbunden ist.

In Figur 7 wird das Dichtelement 20 in einem Kugelkäfig 3a in den Ventilsitz 3 geführt, wobei das Dichtelement 20 in dem Kugelkäfig 3a zentrisch angeordnet ist. Bedingt durch Toleranzen kann eine Längsachse B des Betätigungselements 4 parallel zu der durch den Zulaufkanal 5 verlaufenden ersten Achse A in einem Abstand d angeordnet sein. Der Abstand d führt zu einem Mittenversatz zwischen dem Lagerelement 21 und dem Dichtelement 20. Durch die radial bewegliche Anbindung kann das Dichtelement 20 bei einem Mittenversatz zwischen Kugelkäfig und Betätigungselement 4 dennoch axial mit dem Betätigungselement 4 spielfrei bzw. spielarm verbunden werden.

### Bezugszeichenliste

- 1: elektromagnetisches Ventil
- 2: Ventilkörper
- 3: Ventilsitz
- 3b: weiterer Ventilsitz
- 3a: Kugelkäfig
- 4: Betätigungselement
- 4a: Ende
- 5: Zulaufkanal
- 6: Ablaufkanal
- 8: Spulenträger
- 9: Spule
- 10: Anker

- 20: Dichtelement
- 21: Lagerelement
- 22: Verbindungsstelle
- 23: Fassung
- 24: Anschlag

- 30: Stößel
- 31: Vorsprung
- 32: Umspritzung
- 33: Nut

- 40: Sackbohrung

- A: erste Achse
- B: Längsachse

- M: Zentrum

- d: Abstand

- α: Schwenkwinkel

## Patentansprüche

1. Elektromagnetisches Ventil (1) mit
- wenigstens einem Ventilsitz (3), der zwischen wenigstens einem Zulaufkanal (5) und wenigstens einem Ablaufkanal (6) angeordnet ist,
- einem Dichtelement (20), mit dem der Ventilsitz (3) verschließbar ist, und
- einem Betätigungselement (4), mit dem das Dichtelement (20) zum Verschließen des Ventilsitzes (3) bewegbar ist, wobei
- das Betätigungselement (4) an seinem zu dem Dichtelement (20) weisenden Ende (4a) eine Aufnahme aufweist,
- in der Aufnahme ein Lagerelement (21) angeordnet ist, und
- das Dichtelement (20) mit dem Lagerelement (21) feststehend verbunden ist,
- **dadurch gekennzeichnet, dass** das Dichtelements (20) über eine Verbindungsstelle (22) mit dem Lagerelement (21) verbunden ist.

2. Elektromagnetisches Ventil (1) nach Anspruch 1,
**dadurch gekennzeichnet, dass**
das Lagerelement (21) und/oder das Dichtelement (20) eine Kugel ist.

3. Elektromagnetisches Ventil (1) nach Anspruch 1 oder 2,
**dadurch gekennzeichnet, dass**
das Betätigungselement (4) entlang einer durch den Zulaufkanal (5) verlaufenden ersten Achse (A) bewegbar ist.

4. Elektromagnetisches Ventil (1) nach Anspruch 3,
**dadurch gekennzeichnet, dass**
das Lagerelement (21) um ein Zentrum (M) des Lagerelements (21) drehbar gelagert ist.

5. Elektromagnetisches Ventil (1) nach einem der vorangehenden Ansprüche,
**dadurch gekennzeichnet, dass**
das Betätigungselement (4) einen Stößel (30) aufweist.

6. Elektromagnetisches Ventil (1) nach einem der vorangehenden Ansprüche,
**dadurch gekennzeichnet, dass**
das Betätigungselement (4) an dem zu dem Dichtelement (20) weisenden Ende (4a) eine Umspritzung (32) aufweist.

7. Elektromagnetisches Ventil (1) nach Anspruch 6,
**dadurch gekennzeichnet, dass**
ein Vorsprung (31) des Stößels (30) von der Umspritzung (32) umgeben ist.

8. Elektromagnetisches Ventil (1) nach Anspruch 6 oder 7,
**dadurch gekennzeichnet, dass**
die Umspritzung (32) an dem zu dem Dichtelement (20) weisenden Ende (4a) eine Fassung (23) aufweist.

9. Elektromagnetisches Ventil (1) nach Anspruch 6 oder 7,
**dadurch gekennzeichnet, dass**
das Lagerelement (21) in die Umspritzung (32) eingespritzt ist.

10. Elektromagnetisches Ventil (1) nach einem der vorangehenden Ansprüche,
**dadurch gekennzeichnet, dass**
das Dichtelement (20) an dem Lagerelement (21) entlang einer durch den Zulaufkanal (5) verlaufenden ersten Achse (A) axial fixiert ist.

11. Ventil (1) nach Anspruch 10,
**dadurch gekennzeichnet, dass**
das Dichtelement (20) an dem Lagerelement (21) an der
Verbindungsstelle (22) angeschweißt ist.

12. Elektromagnetisches Ventil (1) nach Anspruch 10 oder 11,
**dadurch gekennzeichnet, dass**
das Dichtelement (20) zu der ersten Achse (A) radial bewegbar ist.

13. Elektromagnetisches Ventil (1) nach einem der vorangehenden Ansprüche,
**dadurch gekennzeichnet, dass**
das Dichtelement (20) um ein Zentrum (M) des Lagerelements (21) verschwenkbar ist.

14. Elektromagnetisches Ventil (1) nach einem der vorangehenden Ansprüche,
**dadurch gekennzeichnet, dass**
das Ende (4a) des Betätigungselements (4) und/oder eine Umspritzung (32) an dem Ende (4a) geeignet ausgebildet ist, einen Schwenkwinkel (α) bei einer Schwenkbewegung des Dichtelements (20) um ein Zentrum (M) des Lagerelements (21) zu begrenzen.

15. Elektromagnetisches Ventil (1) nach einem der Ansprüche 2 bis 13,
**dadurch gekennzeichnet, dass**
das elektromagnetische Ventil (1) einen Kugelkäfig (3a) aufweist zur Führung des Dichtelements (20).

## Claims

1. Electromagnetic valve (1) having
- at least one valve seat (3), which is arranged between at least one inflow duct (5) and at least one outflow duct (6),
- a sealing element (20), by which the valve seat (3) is able to be closed, and
- an actuating element (4), by which the sealing element (20) is able to be moved for the purpose of closing the valve seat (3),
wherein
- the actuating element (4) has a receptacle at its end (4a) pointing to the sealing element (20),
- a bearing element (21) is arranged in the receptacle,
and
- the sealing element (20) is connected in a stationary manner to the bearing element (21),
- **characterized in that**
the sealing element (20) is connected to the bearing element (21) via a connection point (22).

2. Electromagnetic valve (1) according to Claim 1,
**characterized in that**
the bearing element (21) and/or the sealing element (20) is a ball.

3. Electromagnetic valve (1) according to Claim 1 or 2,
**characterized in that**
the actuating element (4) is able to be moved along a first axis (A) extending through the inflow duct (5) .

4. Electromagnetic valve (1) according to Claim 3,
**characterized in that**
the bearing element (21) is mounted so as to be rotatable about a centre (M) of the bearing element (21) .

5. Electromagnetic valve (1) according to one of the preceding claims,
**characterized in that**
the actuating element (4) has a plunger (30).

6. Electromagnetic valve (1) according to one of the preceding claims,
**characterized in that**
the actuating element (4) has an encapsulation (32) at the end (4a) pointing to the sealing element (20) .

7. Electromagnetic valve (1) according to Claims 6,
**characterized in that**
a projection (31) of the plunger (30) is surrounded by the encapsulation (32).

8. Electromagnetic valve (1) according to Claim 6 or 7,
**characterized in that**
the encapsulation (32) has a holder (23) at the end (4a) pointing to the sealing element (20).

9. Electromagnetic valve (1) according to Claim 6 or 7,
**characterized in that**
the bearing element (21) is injection-moulded into the encapsulation (32).

10. Electromagnetic valve (1) according to one of the preceding claims,
**characterized in that**
the sealing element (20) is axially fixed to the bearing element (21) along a first axis (A) extending through the inflow duct (5).

11. Valve (1) according to Claim 10,
**characterized in that**
the sealing element (20) is welded to the bearing element (21) at the connection point (22).

12. Electromagnetic valve (1) according to Claim 10 or 11,
**characterized in that**
the sealing element (20) is able to be moved radially with respect to the first axis (A).

13. Electromagnetic valve (1) according to one of the preceding claims,
**characterized in that**
the sealing element (20) is able to be pivoted about a centre (M) of the bearing element (21).

14. Electromagnetic valve (1) according to one of the preceding claims,
**characterized in that**
the end (4a) of the actuating element (4), and/or an encapsulation (32) at the end (4a), are/is suitably formed for limiting a pivot angle (a) during a pivoting movement of the sealing element (20) about a centre (M) of the bearing element (21).

15. Electromagnetic valve (1) according to one of Claims 2 to 13,
**characterized in that**
the electromagnetic valve (1) has a ball cage (3a) for guiding the sealing element (20).

## Revendications

1. Soupape électromagnétique (1) comprenant :
- au moins un siège de soupape (3) qui est monté entre au moins un canal d'entrée (5) et au moins un canal de sortie (6),
- un élément d'étanchéité (20) permettant de fermer le siège de soupape (3), et
- un élément d'actionnement (4) permettant de déplacer l'élément d'étanchéité (20) pour fermer le siège de soupape (3),
dans laquelle,
- l'élément d'actionnement (4) comporte, à son extrémité (4a) tournée vers l'élément d'étanchéité (20) un logement dans lequel est monté un élément de palier (21), et
- l'élément d'étanchéité (20) est relié solidairement à l'élément de palier (21),
**caractérisée en ce que**
l'élément d'étanchéité (20) est relié à l'élément de palier (21) au niveau d'un emplacement de liaison (22).

2. Soupape électromagnétique (1) conforme à la revendication 1,
**caractérisée en ce que**
l'élément de palier (21) et/ou l'élément d'étanchéité (20) est(sont) constitué(s) par une sphère.

3. Soupape électromagnétique (1) conforme à la revendication 1 ou 2,
**caractérisée en ce que**
l'élément d'actionnement (4) est mobile le long d'un premier axe (A) s'étendant au travers du canal d'entrée (5).

4. Soupape électromagnétique (1) conforme à la revendication 3,
**caractérisée en ce que**
l'élément de palier (21) est monté mobile en rotation autour de son centre (M).

5. Soupape électromagnétique (1) conforme à l'une des revendications précédentes,
**caractérisée en ce que**
l'élément d'actionnement (4) comporte un poussoir (30).

6. Soupape électromagnétique (1) conforme à l'une des revendications précédentes,
**caractérisée en ce que**
l'élément d'actionnement (4) comporte un enrobage (32) à son extrémité (4a) tournée vers l'élément d'étanchéité (20).

7. Soupape électromagnétique (1) conforme à la revendication 6,
**caractérisée en ce qu'**
un prolongement (31) du poussoir (30) est entouré par l'enrobage (32).

8. Soupape électromagnétique (1) conforme à la revendication 6 ou 7,
**caractérisée en ce que**
l'enrobage (32) comporte un formage (23) à son extrémité (4a) tournée vers l'élément d'étanchéité (20).

9. Soupape électromagnétique (1) conforme à la revendication 6 ou 7,
**caractérisée en ce que**
l'élément de palier (21) est injecté dans l'enrobage (32).

10. Soupape électromagnétique (1) conforme à l'une des revendications précédentes,
**caractérisée en ce que**
l'élément d'étanchéité (20) est fixé axialement à l'élément de palier (21) le long d'un premier axe (A) s'étendant au travers du canal d'entrée (5).

11. Soupape électromagnétique (1) conforme à la revendication 10,
**caractérisée en ce que**
l'élément d'étanchéité (20) est soudé sur l'élément de palier (21) au niveau de l'emplacement de liaison (22).

12. Soupape électromagnétique (1) conforme à la revendication 10 ou 11,
**caractérisée en ce que**
l'élément d'étanchéité (20) est mobile radialement par rapport au premier axe (A).

13. Soupape électromagnétique (1) conforme à l'une des revendications précédentes,
**caractérisée en ce que**
l'élément d'étanchéité (20) peut pivoter autour du centre (M) de l'élément de palier (21).

14. Soupape électromagnétique (1) conforme à l'une des revendications précédentes,
**caractérisée en ce que**
l'extrémité (4a) de l'élément d'actionnement (4) et/ou l'enrobage (32) de l'extrémité (4a) est(sont) réalisé(s) pour permettre de limiter l'angle de pivotement (a) lors d'un pivotement de l'élément d'étanchéité (20) autour du centre (M) de l'élément de palier (21).

15. Soupape électromagnétique (1) conforme à l'une des revendications 2 à 13,
**caractérisée en ce que**
la soupape électromagnétique (1) comporte une cage à billes (3a) permettant de guider l'élément d'étanchéité (20).
